(19) Europäisches Patentamt
European Patent Office
Office européen des brevets

(11) **EP 2 073 477 B1**

(12) **EUROPEAN PATENT SPECIFICATION**

(45) Date of publication and mention
of the grant of the patent:
**15.03.2017 Bulletin 2017/11**

(51) Int Cl.:
*H04L 1/00* *(2006.01)*     *H04L 25/06* *(2006.01)*
*H04L 1/18* *(2006.01)*     *H04L 27/38* *(2006.01)*

(21) Application number: **08172310.8**

(22) Date of filing: **19.12.2008**

(54) **Combined 16QAM De-Mapping, 16QAM Constellation Re-Arrangement and TD-SCDMA De-Scrambling**

Kombiniertes 16QAM-De-Mapping, 16QAM-Konstellationsneuanordnung und TD-SCDMA-Entschlüsselung

Combinaison de démappage 16QAM et de réagencement de constellations 16QAM

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **21.12.2007 US 8966 P**
**22.08.2008 US 91180 P**
**17.11.2008 US 272380**

(43) Date of publication of application:
**24.06.2009 Bulletin 2009/26**

(73) Proprietor: **MediaTek Inc.**
**Hsin-Chu 300 (TW)**

(72) Inventor: **Fisher-Jeffes, Timothy Perrin**
**Cambridge, MA 02139 (US)**

(74) Representative: **Hoefer & Partner Patentanwälte mbB**
**Pilgersheimer Straße 20**
**81543 München (DE)**

(56) References cited:
**EP-A2- 1 531 571      US-A1- 2006 039 330**
**US-A1- 2007 189 248**

• **NEC/NEC AUSTRALIA: "Optimal DL signaling for HARQ in HSDPA", 3GPP DRAFT; R1-02-0615.DOC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Paris, France; 20020415, 15 April 2002 (2002-04-15), XP050096179, [retrieved on 2002-04-15]**

**Description**

BACKGROUND

This description relates to a system and method for decoding signals such as quadrature amplitude modulated signals to access embedded information.

While communication system development continues to progress for achieving higher and higher transmission rates, channel conditions continue to limit system performance. For example, channel noise and other types of conditions may impair data transmission through a communication channel. Consequentially, a series of reconstruction phases are used to process received channel signals to decode embedded data. By executing a variety of processes and operations to account for the channel conditions during the reconstruction phases, signals may be demodulated and data decoded for use with one or more applications.

US 20070189248 A1 describes methods and systems for processing signals in a communication system including pipelining processing of a received HSDPA bitstream within a single chip. The pipelining may include calculating a memory address for a current portion of a plurality of information bits in the received HSDPA bitstream, while simultaneously storing on-chip, a portion of the plurality of information bits in the received bitstream that is subsequent to the current portion. A portion of the plurality of information bits in the received HSDPA bitstream that is previous to the current portion may be decoded during the calculating and the storing.

SUMMARY

The invention relates to a method as defined in claim 1, to a system as defined in claim 8 and to a computer program product as defined in claim 15. In general, in one aspect, a method includes identifying a soft decision from a constellation point of a modulated signal. The identification is based upon a logical combination of data representing a first and second portion of the constellation point, data representing an arrangement of the first and second portions of the constellation point, and data representing a scrambling of the first and second portions of the constellation point.

Implementations may include one or more of the following features. The first portion of the constellation point may represent a coordinate pair of an outer constellation. The second portion of the constellation point may represent a coordinate pair of an inner constellation. The data representing the arrangement of the first and second portions of the constellation point may represent an arrangement of an inner constellation coordinate pair and an outer constellation coordinate pair. The data representing the scrambling of the first and second portions of the constellation point may include at least one bit of a scramble code. The first portion of the constellation point may represent an in-phase component or a quadrature component. The first portion of the constellation point may also represent a constellation gain. Various types of signal modulations may be implemented, for example, Quadrature Amplitude Modulation (QAM) signal may be implemented. The logical combination may include one or more logic gates or other types of circuitry.

In general, in one aspect, a system includes a communication receiver for receiving a modulated signal. The communication receiver includes a decoder for identifying a soft decision from a constellation point of a modulated signal. The identification is based upon a logical combination of data representing a first and second portion of the constellation point, data representing an arrangement of the first and second portions of the constellation point and data representing a scrambling of the first and second portions of the constellation point.

Implementations may include one or more of the following features. The first portion of the constellation point may represent a coordinate pair of an outer constellation. The second portion of the constellation point may represent a coordinate pair of an inner constellation. The data representing the arrangement of the first and second portions of the constellation point may represent an arrangement of an inner constellation coordinate pair and an outer constellation coordinate pair. The data representing the scrambling of the first and second portions of the constellation point may include at least one bit of a scramble code. The first portion of the constellation point may represent an in-phase component or a quadrature component. The first portion of the constellation point may also represent a constellation gain. Various types of signal modulations may be implemented, for example, Quadrature Amplitude Modulation (QAM) signal may be implemented. The logical combination may include one or more logic gates or other types of circuitry.

In general, in one aspect, a computer program product is tangibly embodied in an information carrier and comprising instructions. When the instructions are executed, a processor performs a method that includes identifying a soft decision from a constellation point of a modulated signal. The identification is based upon a logical combination of data representing a first and second portion of the constellation point, data representing an arrangement of the first and second portions of the constellation point and data representing a scrambling of the first and second portions of the constellation point.

Implementations may include one or more of the following features. The first portion of the constellation point may represent a coordinate pair of an outer constellation. The second portion of the constellation point may represent a coordinate pair of an inner constellation. The data representing the arrangement of the first and second portions of the constellation point may represent an arrangement of an inner constellation coordinate pair and an outer constellation coordinate pair. The data representing the scrambling of the first and second portions of the constellation point may include at least one bit of a scramble code. The first portion of the constellation point may represent an in-phase component or a quadrature component. The first portion of the constellation point may also represent a constellation gain. Various types of signal modulations may be implemented, for example, Quadrature Amplitude Modulation (QAM) signal may be implemented. The logical combination may include one or more logic gates or other types of circuitry.

In general, in one aspect, a system includes means for receiving a modulated signal. The receiving means includes means for identifying a soft decision from a constellation point of a modulated signal. The identification is based upon a logical combination of data representing a first and second portion of the constellation point, data representing an arrangement of the first and second portions of the constellation point and data representing a scrambling of the first and second portions of the constellation point.

Implementations may include one or more of the following features. The first portion of the constellation point may represent a coordinate pair of an outer constellation. The second portion of the constellation point may represent a coordinate pair of an inner constellation. The data representing the arrangement of the first and second portions of the constellation point may represent an arrangement of an inner constellation coordinate pair and an outer constellation coordinate pair. The data representing the scrambling of the first and second portions of the constellation point may include at least one bit of a scramble code.

These and other aspects and features and various combinations of them may be expressed as methods, apparatus, systems, means for performing functions, program products, and in other ways.

Other features and advantages will be apparent from the description in the claims.

DESCRIPTION OF DRAWINGS

FIG. 1 illustrates a communication system.

FIG. 2 is a block diagram of a portion of a communication receiver.

FIG. 3 illustrates a quadrature amplitude modulation constellation diagram.

FIG. 4 includes a truth table.

FIG. 5 includes Karnough maps.

FIG. 6 is a block diagram of an exemplary decoder architecture.

FIG. 7 is a flowchart of operations of a decoder.

DETAILED DESCRIPTION

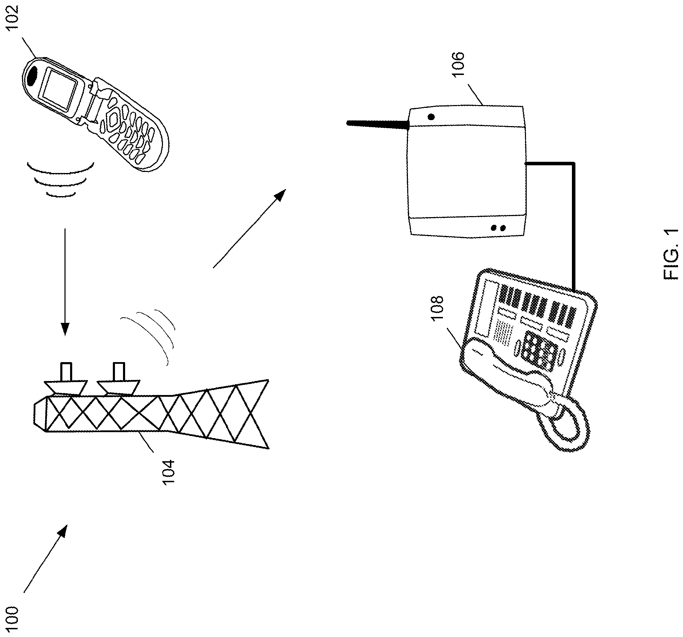

Referring to FIG. 1, communication systems such as a cellular system 100 include communication channels that may be impaired by one or more sources such as environmental noise. To reduce the effects of such conditions, modulation, encoding/decoding and processing techniques have been developed to assist data transmission and reception. For example, with the ever increasing demand for higher data transmission rates, standards have been promoted to adopt particular techniques and methodologies. For example, time division synchronous code division multiple access (TD-SCDMA) standards call for combining time division multiple access (TDMA) with an adaptive, synchronous-mode code division multiple access (CDMA) component. Further, various coding and modulation techniques may be used with the TD-SCDMA, for example, Quadrature Phase Shift Keying (QPSK) and quadrature amplitude modulation (QAM) modulation schemes may be implemented for improved channel conditions and signal transmission.

One or more protocols and communication schemes may be implemented by the cellular system 100 for complying with standards and for achieving particular data transfer rates. For example, the High-Speed Downlink Packet Access (HSDPA) communication scheme, which is a 3G (third generation) mobile telephony communications protocol, may be implemented to allow the cellular system 100 (or other types of communication systems and networks such as Universal Mobile Telecommunications Systems (UMTS)) to provide relatively high data transfer speeds (and capacity) and lower latency for end users. HSDPA is an integral feature of Release 5 of the 3 GPP specification and supports downlink speeds of approximately 14.4 Mbit/s and round trip delays of 70 ms. To support HSDPA, the High-Speed Downlink Shared Channel (HS-DSCH), which is the transport channel carrying user data with HSDPA operation, has been added to the UMTS specification.

HS-DSCH may lack two fundamental features of other WCDMA channels, namely, variable spreading factors and fast power control. Rather, HS-DSCH provides improvements in downlink performance through the utilization of adaptive modulation and coding (AMC), a fast packet scheduling algorithm for base stations, and fast retransmission from base stations, often referred to as hybrid automatic repeat-request (HARQ). HARQ uses incremental redundancy (IR) and chase combining, in which data may be transmitted multiple times using one or more coding techniques. For example, when a corrupt packet is received, the packet is combined with retransmitted packets to efficiently correct encountered errors. In some situations when the retransmissions are corrupted, appropriate decoding may still yield an error-free packet.

By using such standards and processing techniques, the illustrative communication system 100 may allow efficient information transmission without significant content loss. For example, data (e.g., an audio signal) from a cellular telephone 102 may be transmitted to a cellular network (e.g., represented by a cellular tower 104) and appropriately routed to a cellular terminal 106 for delivery to a telephone 108. Along with the cellular terminal 106, other equipment may also be used for collecting and processing the communication signals, for example, a computing device (e.g., a computer system, personal digital assistant (PDA), etc.) with appropriate equipment (e.g., modem, wireless connection device such as an air-card, etc.) may be used for connecting to the communication network (e.g., cellular system 100).

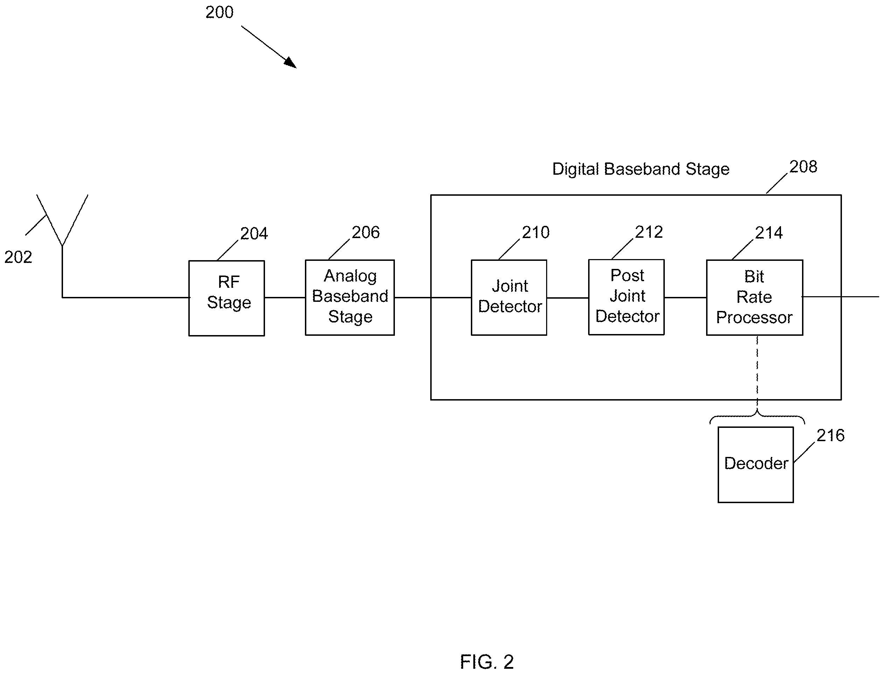

Referring to FIG. 2, a block diagram represents a portion of an exemplary communication receiver 200 of a wireless connection device such as a cellular terminal or an air-card (for use with a computing device). In the illustration, an antenna 202 is capable of transmitting and receiving electromagnetic signals to exchange data with one or more other devices and systems. In regards to signal reception, the communication receiver 200 includes an radio frequency (RF) stage 204 that processes (e.g., removes carrier signals) the electromagnetic signals received by the antenna 202 and provides a corresponding analog signal to an analog baseband stage 206 for converting into the digital domain. In one implementation, the analog baseband stage 206 includes one or multiple analog-to-digital (A/D) converters for digitizing the signals from the RF stage 204. With the carrier signal removed and the signals digitized, a collection of data channels (referred to as physical channels) is provided to a digital baseband stage 208 that processes (e.g., demodulates, decodes, etc.) the channel data and produces binary data appropriately formatted for the next portion of the receiver 200 (e.g., a software application layer).

The digital baseband stage 208 includes a receiver 210 (e.g., a joint detector receiver, a rake receiver, an equalizer, etc.) that detects channels present in the digital data (provided from the analog baseband stage 206). For example, the digital data received by the receiver 210 may represent a number of channels (e.g., up to sixteen channels) that include various content (e.g., control channels, voice channels, etc.). The receiver 210 may also detect the physical channel (or channels) present in the digital data. For example, the data received may represent a sum of physical channels, in which each channel includes a segment with an equivalent number of symbols (e.g., forty-four symbols). From the detected sum of physical channels, the receiver 210 may address a number of types of noise embedded in the digital signal. For example, noise may be introduced by multi-path signals received by the antenna 202, interference associated with the signal content (e.g., inter-code interference), etc. Various operations such as channel equalization along with other techniques and methodologies may be executed by the receiver 210 for addressing noise issues and signal correction.

The receiver 210 also extracts individual physical channels. Using the example from above, the input of the receiver 210 may include a sum the physical channels (e.g., one summed channel with forty-four symbols) and the output may include the extracted individual channels (e.g., sixteen channels, each channel being forty-four symbols in length).

A post receiver 212 also performs other operations in preparation of channel decoding such as preparing the physical channels for demodulation. For example, demodulating physical channels that implement QPSK and QAM (e.g., 16-QAM, 64-QAM, etc.) may be assisted by estimating parameters associated with the modulation schemes such as estimating constellation gain (p) and variance ($\sigma^2$). From the estimations, other quantities may be determined such as signal-and-interference-to-noise-ratio (SINR), for example, to assist with channel demodulation and to provide feedback (e.g., to one or more networks) that represents channel quality. Other operations may also be executed by the post receiver 212 (or another portion of the receiver 200), for example, constellation rotation operations may be executed for rotating QPSK or QAM constellations, as needed. In one particular implementation, each constellation may be rotated $45^O$ by the post receiver 212 to produce constellations with equivalent orientations that are associated with one or more communication standards (e.g., W-CDMA, TD-SCDMA). By adjusting constellation orientation, hardware, software and other portions of the communication receiver 200 may be used with wireless standards associated with one or more other constellation arrangements.

The post receiver 212 provides the extracted physical channels and other information (e.g., estimated parameters) to other portions of the communication receiver 200 (e.g., for processing channels). For example, the channels are provided to a channel decoder and demultiplexer 214 (also included in the digital baseband stage 208), e.g., a bit rate processor, by the post receiver 212. From the data provided, the channel decoder and demultiplexer 214 demodulates and decodes individual transport channels and may provide additional conditioning prior to passing decoded binary data to another portion of the receiver 200 (e.g., a software layer). In general, the channel decoder and demultiplexer 214 converts data received (from the post receiver 212) into a format corresponding to the points of the constellation (referred to as soft decisions) being used (e.g., QPSK, QAM, etc.). Complex values may be provided to the bit rate processor 214 that represent constellation points and formatted to comply with wireless standards such as W-CDMA (e.g., 12-bit floating point representation for use with Frequency Division Duplex (FDD), a 16-bit fixed point representation for use with Time Division Duplex (TDD), etc.). By processing such soft decisions as input, the channel decoder and demultiplexer 214 may represent the data in a reduced precision format (e.g., 4-bit fixed representation) to reduce storage needs while retaining or enhancing dynamic range.

The channel decoder and demultiplexer 214 includes a decoder 216 that executes operations associated with decoding the stream of soft decisions provided by the post receiver 212. For example, de-mapping, de-interleaving, constellation re-arrangement and de-scrambling operations are performed by the decoder 216. Performing such operations may call for the use of considerable resources (e.g., memory, processing time, etc.) for each of these three functions. For example, to execute each of the three functions individually, data may be stored at the completion of each function and retrieved in preparation to execute the next function. By combining the execution of the functions, computational resources (e.g., memory space, processing time, etc.) can be conserved and used for the execution of other operations and procedures.

Modulation schemes, protocols and other communication parameters may factor into combining the functions. For example, operations may be combined in one arrangement for one type of modulation (e.g., QPSK) and in a similar or different arrangement for another type of modulation (e.g., QAM). Along with the modulation type, one or more modulation parameters may be used to execute the combined functions. For example, the constellation gain (p) associated with the modulation scheme may be used along with other parameters. Typically constellation gain is determined by another portion of the communication receiver 200 (e.g., the post receiver 212), however, the channel decoder and demultiplexer 214 may be configured for such an operation. Information associated with the combined functions may also be provided from sources external to the communication receiver 200. For example, information included in received transmissions may also be used for by the decoder 216 to execute the combined functions.

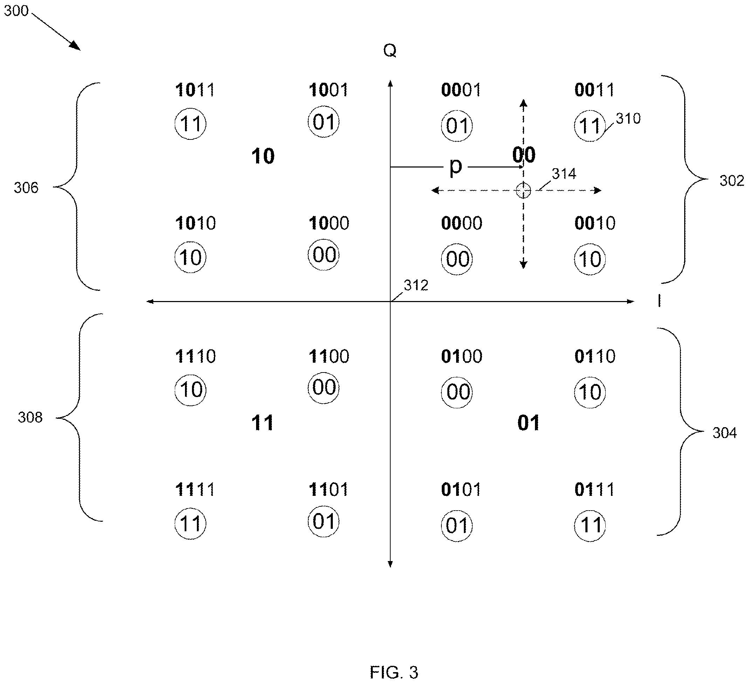

Referring to FIG. 3, a diagram 300 illustrates a constellation of an exemplary modulation scheme that may be used by the system 100. Along with being demodulated by the receiver 200, individual soft decisions are decoded into a digital format (e.g., a 4-bit fixed representation). In this instance, constellation diagram 300 represents a 16-QAM modulated signal and includes four quadrants 302, 304, 306 and 308. Each of the four quadrants respectively includes four constellation points, which each uniquely represent one of the sixteen individual symbols. Complex values provide coordinates of the constellation diagram 300 and include a real part (referred to as the in-phase component) represented on the horizontal axis and an imaginary part (referred to as the quadrature component) represented on the vertical axis.

Various conventions may be implemented for representing the sixteen symbols included in the constellation diagram 300. For example, each symbol may be uniquely represented with data that represents the one quadrant within which the symbol is located and data that represents each one of the four symbols within that quadrant. To demonstrate, a two-bit number (i.e., 00) may be used to represent each quadrant (illustrated in bold font in the figure) and another two-bit number to represent each of the four symbols (represented in normal font in the figure) within the quadrant. As such, each of the sixteen symbols are uniquely represented by a four-bit number. For example, symbol 310 may be represented with the four-bit value 0011, in which "00" represents the quadrant and "11" represents the particular symbol (of the four) within that quadrant. Thereby, each symbol can be identified from two constellations, an outer constellation (represented with coordinate axes 312, which define the quadrants 302-308) and an inner constellation (represented with coordinate axes 314). Both the inner and outer constellations each provide two-bit representations that combine to produce a four-bit representation of one of the sixteen symbols. As such, the decoder 216 processes the soft decisions to produce a representation of the symbols.

From the data embedded in the soft decisions, the decoder 216 attempts to identify the particular four-bit symbol being represented. As such, in-phase (I) and quadrature (Q) components may be used to identify a quadrant (e.g., quadrant 302) of the outer constellation 312 associated with each received soft decision. For example, for positive values of I and Q, constellation quadrant 302 is identified, and for negative values of both I and Q, constellation quadrant 308 is identified. To identify the symbol within the inner constellation (e.g., inner constellation 314), one or more constellation parameters may be used with the I and Q data. For example, as illustrated in the figure, the constellation gain (p) provides a value that represents the center of each inner constellation. As such, the constellation gain can be used in conjunction with the I and Q data to uniquely identify each symbol within the inner constellation. For example, the quantities $p - |I|$ and $p - |Q|$ may be used for identifying the symbol within the inner constellation. As such, in this implementation, each soft decision may be uniquely demapped using the four quantities:

$$( \, I \, , Q, p - | \, I \, |, p - | \, Q \, | \, ). \qquad\qquad (1)$$

While equation (1) provides one particular arrangement of the quantities for identifying each of the sixteen symbols, other soft decision arrangements may also be used. Further, while I and Q data along with constellation gain is used here for symbol identification, other transmission parameters (e.g., modulation parameters) may be used separately or in combination.

Along with de-mapping the soft decisions, the decoder 216 also performs other operations for symbol identification. For example, prior to transmission, the four terms of equation (1) may be arranged to reduce the probability of transmission loss. Various rearrangement schemes may be implemented, for example, terms may be rearranged for each four-term group transmitted, or rearranged for a predefined number of groups (e.g., terms rearranged for every four groups, etc.), or rearranged after a predefined amount of time (e.g., terms rearranged every second). Generally, the probability of error is less for more significant terms such as the first term (I) and the second term (Q) provided by equation 1. As such, interchanging the first pair of terms (I and Q) with the second pair of terms (p - | I | , p - | Q |) may reduce transmission error. Similarly, the four terms may be individually arranged for reducing error. Implementing one particular technique, different arrangements may be used for the term pair (I and Q) and the term pair (p - | I |, p - | Q |). For example, the terms may be arranged as:

$$( \, I \, , Q, p - | \, I \, |, p - | \, Q \, | \, ),$$

or as

$$( \, p - | \, I \, |, p - | \, Q \, |, I, Q \, ). \qquad\qquad (2)$$

As such, a single bit may be used to identify which particular arrangement is being used. Along with arranging the terms, negation may be applied (e.g., a sign change) to the terms to further differentiate the transmitted terms and reduce the probability of error. Similar to identifying the arrangement, a single bit may be used to identify negation. Thus, two bits may represent parameters (referred to as b(1) and b(2)) for re-arrangement parameters that identify term pair arrangements and negation. In one scenario, these re-arrangement parameters are transmitted to the receiver 200 within a high-speed shared control channel (HS-SCCH), however, one or more transmission methodologies and techniques may be implemented.

In conjunction with incorporating particular arrangements, techniques may be implemented to scramble the soft decisions prior to transmission. As such, the decoder 216 also de-scrambles (along with de-mapping and re-arranging) the constellation points that represent the soft decisions. In one arrangement, the soft decisions are bit level scrambled with a predefined scramble code that is provided to the receiver 200. The decoder 216 can use the binary code to descramble the soft decisions, for example, by using a masking technique or other similar techniques.

One or more techniques and methodologies may be implemented by the decoder 216 to de-interleave, descramble, de-map and re-arrange the received soft decisions and thereby provide, e.g., bit representations (e.g., 4-bit representation) that corresponds to a constellation point. For example, the decoder 216 may execute each of these functions in a combined fashion to reduce memory and processing needs, and thereby conserve resources. In one arrangement, logical states representative of de-interleaving, de-scrambling, de-mapping and re-arrangement may be combined to define logical operations to perform the functions. The decoder 216 may use combinational logic and other types of circuitry to provide the logical operations. Processor based designs and other types of architectures may also be implemented to provide the combined logical operations for de-interleaving, de-scrambling, de-mapping and constellation re-arrangement. For example, one or more microprocessors may execute instructions to provide the logical operations.

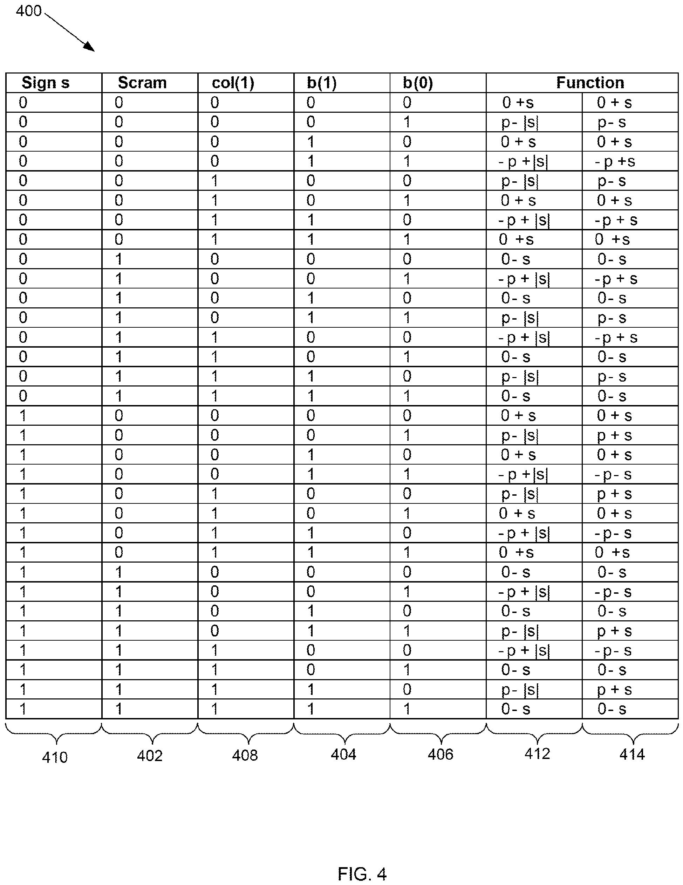

Referring to FIG. 4, a chart 400 includes a truth table with entries that represent each of the logical states of the de-interleaving, de-scrambling, de-mapping and constellation re-arrangement operations. Five binary parameters are used to represent each of the logical states of the operations, which correspond to thirty-two entries of the chart 400. In this arrangement, de-scrambling operations are represented in a column 402 with binary values (i.e., logic 1 or logic 0) of one bit of a scrambling code. For the re-arrangement parameters b(0) and b(1), which represent the position of term pairs I,Q and p - | I |,p - | Q |, and negation, the binary values of two bits are represented in columns 404 and 406. De-mapping/de-interleaving is provided by a one-bit parameter (referred to as col(1) in column 408) that represents a selection between an inner or outer constellation, and a column 410 represents the sign of the soft decision received by the receiver 200 and provided to the decoder 216. From the logical states represented in the columns 402-410, the soft decisions are represented as a function of the variables s (which represent I or Q as provided by col(0)) and p (constellation gain), as provided by columns 412 and 414. From this logical representation, logical operations may be defined to provide the soft decisions from the logical input values (provided by columns 402-410).

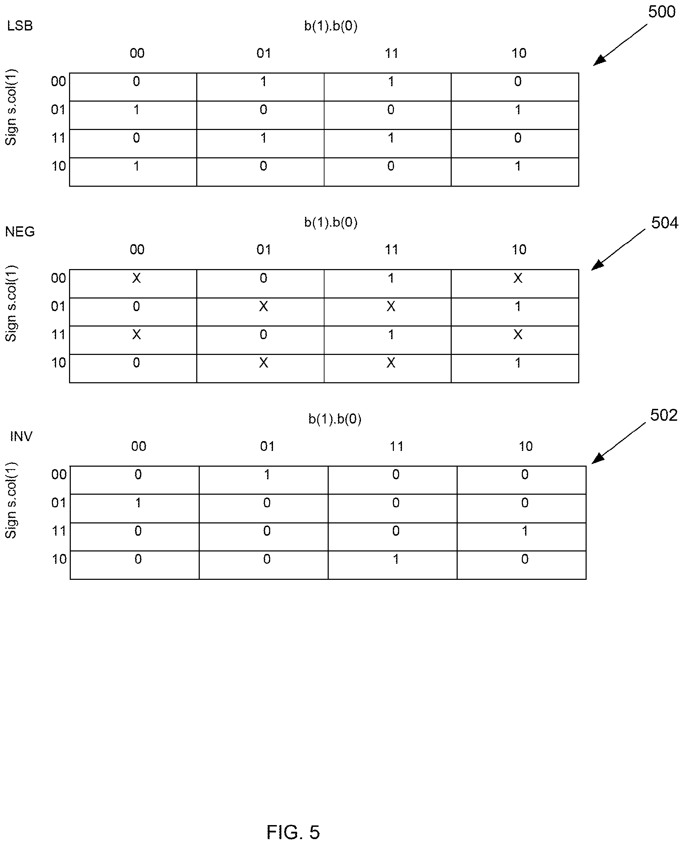

Referring to FIG. 5, three Karnough maps 500, 502 and 504 are illustrated that provide three selection terms. The map 500 represents a selection (referred to as LSB) between the values 0 or p (the constellation gain) while the map 502 represents the selection (referred to as INV) between the values s and -s and the map 504 provides a selection (referred to as NEG) between the values p and -p. In this particular arrangement, the LSB and NEG selection terms operate similarly such that terms in which LSB is logic 0 can be treated as a "don't care" condition for NEG (for situations in which LSB is a higher priority selection). For this arrangement, the de-scrambling term has been omitted since term can be provided with an exclusive-or logical operation between NEG and INV (for instances when INV is active).

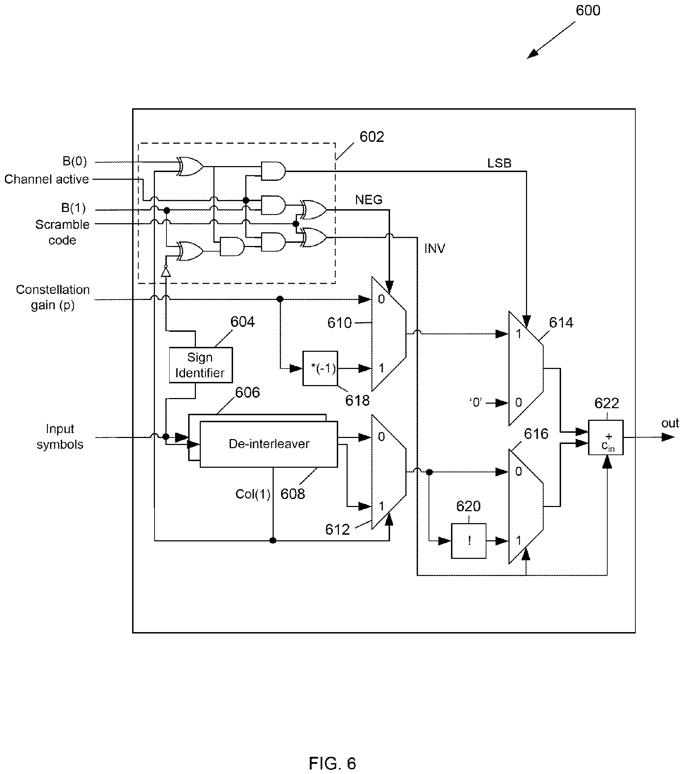

Referring to FIG 6. a block diagram represents a portion of a decoder 600 capable of de-scrambling, re-arranging and de-interleaving/de-mapping soft decisions in a combined manner. In this particular arrangement, the functionality represented in the Karnough maps 500, 502 and 504 (shown in FIG. 5) is realized with a combination of logic gates 602 included in the decoder 600. To provide the logic signals LSB, NEG and INV, the combinational logic includes a series of AND gates and exclusive-OR gates, however in other arrangements, other types of logic gates may be used (e.g., NAND, OR, NOT gates, etc.) to produce the logic signals for de-scrambling, constellation rearranging and de-mapping an input stream of soft decisions.

Along with the received soft decision stream, the constellation gain (p) is provided to the decoder 600, for example, from another portion of the receiver (e.g., a post receiver). Along with the received soft decisions, other transmitted information aids the decoder 600 to provide the combined functionality. For example, a sequence of bits used to scramble the soft decisions is provided to combination logic gates 602 for de-scrambling the received data. Two digital input signals, which respectively represent b(0) and b(1), are provided for assisting with the constellation rearrangement of the soft decision. Additionally, in this implementation, a digital signal (labeled "Channel Active") is provided (e.g., from the receiver) that indicates if a channel has been received and is ready to be processed by the decoder 600.

Upon being received by the decoder 600, the soft decisions are provided to a sign identifier 604 that strips and passes the sign to the combinational logic 602. The input is also passed to a pair a parallel connected de-interleaver 606 and 608 that provide soft-decision pairs. In particular, one de-interleaver provides constellation points associated with an outer constellation and the second de-interleaver provides constellation points associated with an inner constellation. From the inner and outer constellation points, the de-interleavers 606, 608 also provide a logic signal (labeled col(1)) that represents if inner or outer constellation data is being provided by the de-interleavers 606, 608. Additionally, the de-interleavers 606, 608 may provide other functionality such as providing one or more addresses for retrieving soft decisions (e.g. from memory) that are associated with the de-interleaving pattern. From the logic signals provided to the combinational logic 602, a series of multiplexers 610, 612, 614, 616, a logical operator 618 (combination inverter and incrementer), an inverter 620 and a summer 622 (with two-complements functionality) provide the quad of soft decision outputs (e.g., represented as a 4-bit fixed representation). By using combinational logic to combine the three functions, less processing resources along with memory space (e.g., for storing data between execution of the functions) is needed. Further, while decoder 600 is represented with one particular architecture (e.g., using combination logic 602), other implementations may be used for combining the functions of de-scrambling, de-interleaving/de-mapping and constellation rearrangement.

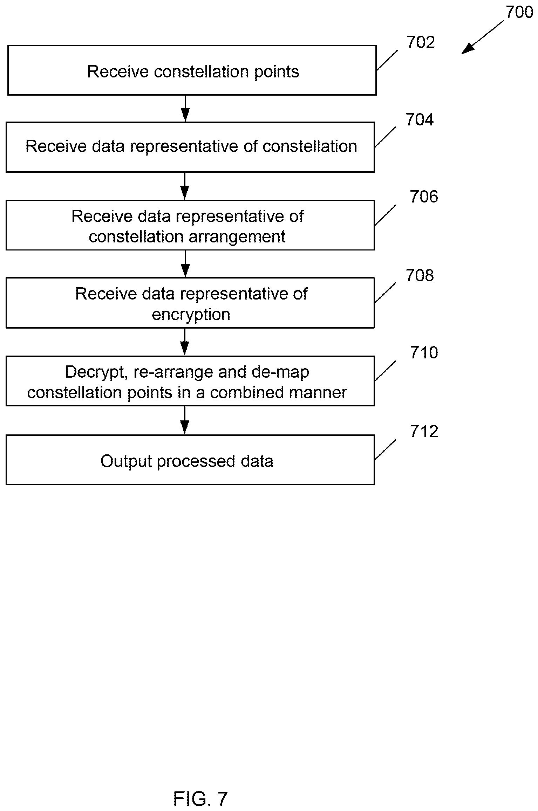

Referring to FIG. 7, a flowchart 700 represents some of the operations of the decoder 216. As mentioned above, in one implementation the decoder 216 may include combinational logic gates, a processor based architecture or other type of design. In some processor based architectures, the decoder 216 may be executed on a single processor or distributed across multiple processors. Various types of circuitry (e.g., combinational logic, sequential logic, etc.) and computing devices (e.g., a computer system) may also be used individually or in combination to execute the operations of the decoder 216. For example, in a processor based receiver design, instructions may be executed by a processor (e.g., a microprocessor) to provide the operations of the decoder 216. Such instructions may be stored in a storage device (e.g., hard drive, CD-ROM, etc.) and provided to the processor (or multiple processors) for execution.

Operations of the decoder 216 include receiving 702 constellation points (of a modulation scheme) that represent soft decisions. For example, the points may be provided to the decoder 216 from the post receiver 212, via the channel decoder and demultiplexer 214. Operations also include receiving 704 data that represents parameters associated with the constellation such as constellation gain. Additionally, constellation parameters indicative of if the received constellation points are associated with an inner or outer portion of the constellation are received. Briefly referring to FIG. 6, the parameter col(1), from the pair of de-interleavers 606, 608, represents if data is inner or outer constellation data. Along with data representative of constellations, operations also include receiving 706 data that represents the arrangement of the constellation data. For example, two received bits (e.g., b(0) and b(1)) may represent how constellation point pairs (e.g., I , Q and p - | I |, p - | Q |) are arranged and indicate if the pairs have been inverted. Data representative of scrambling may also be received 708 by the decoder 216 such as a bit sequence that represents scrambling of the constellation points prior to transmission.

Upon receiving the data representing the constellation points and the constellation parameters, operations of the decoder 216 include de-scrambling, de-interleaving/de-mapping and rearranging 710 the constellation points in a combined manner. For example, as shown in FIG. 6, combinational logic may be implemented by the decoder 216 to perform such operations. Once processed, operations of the decoder 216 may include outputting 712 the processed data, e.g., for processing by another portion of the channel decoder and demultiplexer 214 and the communication receiver 200.

As mentioned above, in some receiver designs may be processor based. As such, to perform the operations described in the flow chart 700, the decoder 216 and optionally with other portions of the channel decoder and demultiplexer 214, may perform any of the computer-implement methods described previously, according to one implementation. For example, the receiver 200 may include a computing device (e.g., a computer system) for executing instructions associated with the decoder 216. The computing device may include a processor, a memory, a storage device, and an input/output device. Each of the components may be interconnected using a system bus or other similar structure. The processor may be capable of processing instructions for execution within the computing device. In one implementation, the processor is a single-threaded processor. In another implementation, the processor is a multi-threaded processor. The processor is capable of processing instructions stored in the memory or on the storage device to display graphical information for a user interface on the input/output device.

The memory stores information within the computing device. In one implementation, the memory is a computer-readable medium. In one implementation, the memory is a volatile memory unit. In another implementation, the memory is a non-volatile memory unit.

The storage device is capable of providing mass storage for the computing device. In one implementation, the storage device is a computer-readable medium. In various different implementations, the storage device may be a floppy disk device, a hard disk device, an optical disk device, or a tape device.

The input/output device provides input/output operations for the computing device. In one implementation, the input/output device includes a keyboard and/or pointing device. In another implementation, the input/output device includes a display unit for displaying graphical user interfaces.

The features described (e.g., the decoder 216) can be implemented in digital electronic circuitry, or in computer hardware, firmware, software, or in combinations of them. The apparatus can be implemented in a computer program product tangibly embodied in an information carrier, e.g., in a machine-readable storage device or in a propagated signal, for execution by a programmable processor; and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

Other embodiments are within the scope of the following claims. The techniques described herein can be performed in a different order and still achieve desirable results.

**Claims**

1. A method comprising:

   receiving constellation points of a modulated signal, data representing first and seconds portions of the constellation points, data representing arrangements of the first and second portions of the constellation points, data representing scrambling of the first and second portions of the constellation points, and data representing a constellation gain; and
   identifying a soft decision from the constellation points based upon a logical combination of the data representing the first and second portions of the constellation points, the data representing the arrangements of the first and second portions of the constellation points, the data representing the scrambling of the first and second portions of the constellation points, and the data representing the constellation gain, wherein de-scrambling, de-interleaving/de-mapping and rearranging the constellation points is executed in a combined manner.

2. The method of claim 1, wherein the first portion of the constellation point represents a coordinate pair of an outer constellation.

3. The method of claim 1 or 2, wherein the second portion of the constellation point represents a coordinate pair of an inner constellation.

4. The method of any of claims 1 to 3, wherein the data representing the arrangement of the first and second portions of the constellation point represents an arrangement of an inner constellation coordinate pair and an outer constellation coordinate pair.

5. The method of any of claims 1 to 4, wherein the data representing the scrambling of the first and second portions of the constellation point includes at least one bit of a scramble code.

6. The method of any of claims 1 to 5, wherein the first portion of the constellation point represents an in-phase component.

7. The method of any of claims 1 to 6, wherein the first portion of the constellation point represents a quadrature component.

8. A system comprising:

   a communication receiver (200) for receiving a modulated signal, the communication receiver (200) including, a decoder (600) for receiving constellation points of a modulated signal, data representing first and seconds portions of the constellation points, data representing arrangements of the first and second portions of the constellation points, data representing scrambling of the first and second portions of the constellation points, and data representing a constellation gain, and identifying a soft decision from the constellation points based upon a logical combination of the data representing the first and second portions of the constellation points, the data representing the arrangements of the first and second portions of the constellation points, the data representing the scrambling of the first and second portions of the constellation points, and the data representing the constellation gain, wherein the decoder is further adapted for executing de-scrambling, de-interleaving/de-mapping and rearranging the constellation points in a combined manner.

9. The system of claim 8, wherein the first portion of the constellation point represents a coordinate pair of an outer constellation.

10. The system of claim 8 or 9, wherein the second portion of the constellation point represents a coordinate pair of an inner constellation.

11. The system of any of claims 8 to 10, wherein the data representing the arrangement of the first and second portions of the constellation point represents an arrangement of an inner constellation coordinate pair and an outer constellation coordinate pair.

**12.** The system of any of claims 8 to 11, wherein the data representing the scrambling of the first and second portions of the constellation point includes at least one bit of a scramble code.

**13.** The system of any of claims 8 to 12, wherein the first portion of the constellation point represents an in-phase component.

**14.** The system of any of claims 8 to 13, wherein the first portion of the constellation point represents a quadrature component.

**15.** A computer program product tangibly embodied in an information carrier and comprising instructions that when executed by a processor perform a method to any of claims 1 to 7.

**Patentansprüche**

**1.** Verfahren, aufweisend:

Empfangen von Konstellationspunkten eines modulierten Signals, wobei Daten erste und zweite Teile der Konstellationspunkte repräsentieren, Daten Anordnungen der ersten und zweiten Teile der Konstellationspunkte repräsentieren, Daten eine Verschlüsselung der ersten und zweiten Teile der Konstellationspunkte repräsentieren, und Daten eine Konstellationsverstärkung repräsentieren; und
Identifizieren einer Soft-Entscheidung von den Konstellationspunkten basierend auf einer logischen Verknüpfung der Daten, welche die ersten und zweiten Teile der Konstellationspunkte repräsentieren, der Daten, welche die Anordnungen der ersten und zweiten Teile der Konstellationspunkte repräsentieren, der Daten, welche die Verschlüsselung der ersten und zweiten Teile der Konstellationspunkte repräsentieren, und der Daten, welche die Konstellationsverstärkung repräsentieren, wobei
ein Entschlüsseln, ein De-Interleaving/De-Mapping und ein Neuanordnen der Konstellationspunkte in einer kombinierten Weise ausgeführt wird.

**2.** Verfahren gemäß Anspruch 1, wobei der erste Teil des Konstellationspunkts ein Koordinatenpaar einer äußeren Konstellation repräsentiert.

**3.** Verfahren gemäß Anspruch 1 oder 2, wobei der zweite Teil des Konstellationspunkts ein Koordinatenpaar einer inneren Konstellation repräsentiert.

**4.** Verfahren gemäß einem der Ansprüche 1 bis 3, wobei die Daten, welche die Anordnung der ersten und zweiten Teile des Konstellationspunkts repräsentieren, eine Anordnung eines inneren Konstellationskoordinatenpaars und eines äußeren Konstellationskoordinatenpaars repräsentieren.

**5.** Verfahren gemäß einem der Ansprüche 1 bis 4, wobei die Daten, welche die Verschlüsselung der ersten und zweiten Teile des Konstellationspunkts repräsentieren, mindestens ein Bit eines Verschlüsselungs-Codes aufweisen.

**6.** Verfahren gemäß einem der Ansprüche 1 bis 5, wobei der erste Teil des Konstellationspunkts eine In-Phase-Komponente repräsentiert.

**7.** Verfahren gemäß einem der Ansprüche 1 bis 6, wobei der erste Teil des Konstellationspunkts eine Quadratur-Komponente repräsentiert.

**8.** System, aufweisend:

einen Kommunikationsempfänger (200) zum Empfangen eines modulierten Signals, wobei der Kommunikationsempfänger (200) einen Decodierer (600) zum Empfangen von Konstellationspunkten eines modulierten Signals aufweist, wobei Daten erste und zweite Teile der Konstellationspunkte repräsentieren, Daten Anordnungen der ersten und zweiten Teile der Konstellationspunkte repräsentieren, Daten eine Verschlüsselung der ersten und zweiten Teile der Konstellationspunkte repräsentieren und Daten eine Konstellationsverstärkung repräsentieren,
und zum Identifizieren einer Soft-Entscheidung von den Konstellationspunkten basierend auf einer logischen Verknüpfung der Daten, welche die ersten und zweiten Teile der Konstellationspunkte repräsentieren, der Daten, welche die Anordnungen der ersten und zweiten Teile der Konstellationspunkte repräsentieren, der Daten, welche die Verschlüsselung der ersten und zweiten Teile der Konstellationspunkte repräsentieren, und der Daten, welche die Konstellationsverstärkung repräsentieren, wobei der Decodierer weiter für ein Ausführen eines Entschlüsselns, eines De-Interleavings/De-Mappings und eines Neuarrangierens der Konstellationspunkte in einer kombinierten Weise angepasst ist.

9. System gemäß Anspruch 8, wobei der erste Teil des Konstellationspunkts ein Koordinatenpaar einer äußeren Konstellation repräsentiert.

10. System gemäß Anspruch 8 oder 9, wobei der zweite Teil des Konstellationspunkts ein Koordinatenpaar einer inneren Konstellation repräsentiert.

11. System gemäß einem der Ansprüche 8 bis 10, wobei die Daten, welche die Anordnung der ersten und zweiten Teile des Konstellationspunkts repräsentieren, eine Anordnung eines inneren Konstellationskoordinatenpaars und eines äußeren Konstellationskoordinatenpaars repräsentieren.

12. System gemäß einem der Ansprüche 8 bis 11, wobei die Daten, welche die Verschlüsselung der ersten und zweiten Teile des Konstellationspunkts repräsentieren, mindestens ein Bit eines Verschlüsselungs-Codes aufweisen.

13. System gemäß einem der Ansprüche 8 bis 12, wobei der erste Teil des Konstellationspunkts eine In-Phase-Komponente repräsentiert.

14. System gemäß einem der Ansprüche 8 bis 13, wobei der erste Teil des Konstellationspunkts eine Quadratur-Komponente repräsentiert.

15. Computer-Programmprodukt, das konkret in einem Informationsträger enthalten ist und Instruktionen aufweist, welche, wenn sie durch einen Prozessor ausgeführt werden, ein Verfahren gemäß einem der Ansprüche 1 bis 7 durchführen.

**Revendications**

1. Procédé comprenant le fait:

de recevoir des points de constellation d'un signal modulé, des données représentant des première et deuxième parties des points de constellation, des données représentant des agencements des première et deuxième parties des points de constellation, des données représentant un embrouillage des première et deuxième parties des points de constellation et des données représentant un gain de constellation; et
d'identifier une décision souple à partir des points de constellation sur la base d'une combinaison logique des données représentant les première et deuxième parties des points de constellation, des données représentant les agencements des première et deuxième parties des points de constellation, des données représentant l'embrouillage des première et deuxième parties des points de constellation, et des données représentant le gain de constellation, où un désembrouillage, un désentrelacement/démappage et un réagancement des points de constellation sont exécutés de manière combinée.

2. Procédé de la revendication 1, dans lequel la première partie du point de constellation représente une paire de coordonnées d'une constellation extérieure.

3. Procédé de la revendication 1 ou 2, dans lequel la deuxième partie du point de constellation représente une paire de coordonnées d'une constellation intérieure.

4. Procédé de l'une des revendications 1 à 3, dans lequel les données représentant l'agencement des première et deuxième parties du point de constellation représentent un agencement d'une paire de coordonnées de constellation intérieure et d'une paire de coordonnées de constellation extérieure.

5. Procédé de l'une des revendications 1 à 4, dans lequel les données représentant l'embrouillage des première et deuxième parties du point de constellation comportent au moins un bit d'un code d'embrouillage.

**6.** Procédé de l'une des revendications 1 à 5, dans lequel la première partie du point de constellation représente une composante en phase.

**7.** Procédé de l'une des revendications 1 à 6, dans lequel la première partie du point de constellation représente une composante en quadrature.

**8.** Système comprenant:

un récepteur de communication (200) pour recevoir un signal modulé, le récepteur de communication (200) comportant, un décodeur (600) pour recevoir des points de constellation d'un signal modulé, des données représentant des première et deuxième parties des points de constellation, des données représentant des agencements des première et deuxième parties des points de constellation, des données représentant un embrouillage des première et deuxième parties des points de constellation, et des données représentant un gain de constellation et pour identifier une décision souple à partir des points de constellation sur la base d'une combinaison logique des données représentant les première et deuxième parties des points de constellation, des données représentant les agencements des première et deuxième parties des points de constellation, des données représentant l'embrouillage des première et deuxième parties des points de constellation, et des données représentant le gain de constellation, où le décodeur est en outre adapté pour exécuter un désembrouillage, un désentrelacement/démappage et un réagencement des points de constellation de manière combinée.

**9.** Système de la revendication 8, dans lequel la première partie du point de constellation représente une paire de coordonnées d'une constellation extérieure.

**10.** Système de la revendication 8 ou 9, dans lequel la deuxième partie du point de constellation représente une paire de coordonnées d'une constellation intérieure.

**11.** Système de l'une des revendications 8 à 10, dans lequel les données représentant l'agencement des première et deuxième parties du point de constellation représentent un agencement d'une paire de coordonnées de constellation intérieure et d'une paire de coordonnées de constellation extérieure.

**12.** Système de l'une des revendications 8 à 11, dans lequel les données représentant l'embrouillage des première et deuxième parties du point de constellation comportent au moins un bit d'un code d'embrouillage.

**13.** Système de l'une des revendications 8 à 12, dans lequel la première partie du point de constellation représente une composante en phase.

**14.** Système de l'une des revendications 8 à 13, dans lequel la première partie du point de constellation représente une composante en quadrature.

**15.** Produit de programme informatique incorporé de manière tangible dans un support d'informations et comprenant des instructions qui, lorsqu'elles sont exécutées par un processeur, mettent en oeuvre un procédé selon l'une des revendications 1 à 7.

FIG. 1

EP 2 073 477 B1

FIG. 2

EP 2 073 477 B1

300

Q

306

10**11**  10**01**    00**01**  00**11**
(11)   (01)     (01)    (11) ⟋310

**10**    p ——→ **00**    314

302

10**10**  10**00**    00**00**  00**10**
(10)   (00)     (00)    (10)

312

I

308

11**10**  11**00**    01**00**  01**10**
(10)   (00)     (00)    (10)

**11**    **01**

304

11**11**  11**01**    01**01**  01**11**
(11)   (01)     (01)    (11)

FIG. 3

400

| Sign s | Scram | col(1) | b(1) | b(0) | Function | |
|---|---|---|---|---|---|---|
| 0 | 0 | 0 | 0 | 0 | 0 +s | 0 + s |
| 0 | 0 | 0 | 0 | 1 | p- \|s\| | p- s |
| 0 | 0 | 0 | 1 | 0 | 0 + s | 0 + s |
| 0 | 0 | 0 | 1 | 1 | - p +\|s\| | - p +s |
| 0 | 0 | 1 | 0 | 0 | p- \|s\| | p- s |
| 0 | 0 | 1 | 0 | 1 | 0 + s | 0 + s |
| 0 | 0 | 1 | 1 | 0 | - p + \|s\| | -p + s |
| 0 | 0 | 1 | 1 | 1 | 0 +s | 0 +s |
| 0 | 1 | 0 | 0 | 0 | 0- s | 0- s |
| 0 | 1 | 0 | 0 | 1 | - p + \|s\| | - p + s |
| 0 | 1 | 0 | 1 | 0 | 0- s | 0- s |
| 0 | 1 | 0 | 1 | 1 | p- \|s\| | p- s |
| 0 | 1 | 1 | 0 | 0 | - p + \|s\| | - p + s |
| 0 | 1 | 1 | 0 | 1 | 0- s | 0- s |
| 0 | 1 | 1 | 1 | 0 | p- \|s\| | p- s |
| 0 | 1 | 1 | 1 | 1 | 0- s | 0- s |
| 1 | 0 | 0 | 0 | 0 | 0 + s | 0 + s |
| 1 | 0 | 0 | 0 | 1 | p- \|s\| | p + s |
| 1 | 0 | 0 | 1 | 0 | 0 + s | 0 + s |
| 1 | 0 | 0 | 1 | 1 | - p +\|s\| | -p- s |
| 1 | 0 | 1 | 0 | 0 | p- \|s\| | p + s |
| 1 | 0 | 1 | 0 | 1 | 0 + s | 0 + s |
| 1 | 0 | 1 | 1 | 0 | -p + \|s\| | -p- s |
| 1 | 0 | 1 | 1 | 1 | 0 +s | 0 +s |
| 1 | 1 | 0 | 0 | 0 | 0- s | 0- s |
| 1 | 1 | 0 | 0 | 1 | - p + \|s\| | - p- s |
| 1 | 1 | 0 | 1 | 0 | 0- s | 0- s |
| 1 | 1 | 0 | 1 | 1 | p- \|s\| | p + s |
| 1 | 1 | 1 | 0 | 0 | - p + \|s\| | -p- s |
| 1 | 1 | 1 | 0 | 1 | 0- s | 0- s |
| 1 | 1 | 1 | 1 | 0 | p- \|s\| | p + s |
| 1 | 1 | 1 | 1 | 1 | 0- s | 0- s |

410 402 408 404 406 412 414

FIG. 4

500

LSB         b(1).b(0)

| Sign s.col(1) | 00 | 01 | 11 | 10 |
|---|---|---|---|---|
| 00 | 0 | 1 | 1 | 0 |
| 01 | 1 | 0 | 0 | 1 |
| 11 | 0 | 1 | 1 | 0 |
| 10 | 1 | 0 | 0 | 1 |

504

NEG         b(1).b(0)

| Sign s.col(1) | 00 | 01 | 11 | 10 |
|---|---|---|---|---|
| 00 | X | 0 | 1 | X |
| 01 | 0 | X | X | 1 |
| 11 | X | 0 | 1 | X |
| 10 | 0 | X | X | 1 |

502

INV         b(1).b(0)

| Sign s.col(1) | 00 | 01 | 11 | 10 |
|---|---|---|---|---|
| 00 | 0 | 1 | 0 | 0 |
| 01 | 1 | 0 | 0 | 0 |
| 11 | 0 | 0 | 0 | 1 |
| 10 | 0 | 0 | 1 | 0 |

FIG. 5

FIG. 6

700

702

Receive constellation points

704

Receive data representative of constellation

706

Receive data representative of constellation arrangement

708

Receive data representative of encryption

710

Decrypt, re-arrange and de-map constellation points in a combined manner

712

Output processed data

FIG. 7

**EP 2 073 477 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070189248 A1